# EUROPEAN PATENT APPLICATION

(11) **EP 4 113 697 A1**
(43) Date of publication of application: **04.01.2023**
(21) Application number: 21931927.4
(22) Date of filing: 17.11.2021
(51) Int. Cl.: H01M 10/42, H01M 4/13, H01M 50/534

(54) **ELECTRODE HAVING IMPROVED SAFETY AND METHOD FOR MANUFACTURING SAME**

(30) Priority: 15.04.2021 KR 20210049070
(71) Applicant: LG Energy Solution, Ltd., Seoul 07335 (KR)
(72) Inventor: KWON, Soon Ho, Daejeon 34122 (KR); PARK, Sung Bin, Daejeon 34122 (KR); JO, Mi Ru, Daejeon 34122 (KR); KANG, Joon Koo, Daejeon 34122 (KR); KIM, Ki Hwan, Daejeon 34122 (KR); KANG, Hyeong Seop, Daejeon 34122 (KR)
(74) Representative: Plasseraud IP
(86) International application number: PCT/KR2021/016910
(87) International publication number: WO 2022/220360

(57) **Abstract**

The present invention relates to an electrode having an improved safety, and the electrode includes: a current collector including a main body and an electrode tab formed at one side of the main body; a conductive coating layer which is formed on at least one surface of the current collector and includes a conducting polymer of which resistance increases when a temperature rises; and an electrode mixture layer which is formed on the conductive coating layer. Herein, the conductive coating layer is formed on a region including both the main body and the electrode tab.

## Description

### [Technical Field]

This application claims the benefit of priority based on Korean Patent Application No. 10-2021-0049070, filed on April 15, 2021, and the entire contents of the Korean patent application are incorporated herein by reference.

The present invention relates to an electrode and a method of manufacturing the electrode, and more particularly, to an electrode having an improved safety and a method of manufacturing the same.

### [Background Art]

Recently, secondary batteries capable of charging and discharging have been widely used as energy sources of wireless mobile devices. In addition, the secondary battery has attracted attention as an energy source of an electric vehicle, a hybrid electric vehicle, etc., which are proposed as a solution for air pollution of existing gasoline vehicles and diesel vehicles using fossil fuel. Therefore, the types of applications using the secondary battery are currently much diversified due to the advantages of the secondary battery, and it is expected that the secondary battery will be applied to many fields and products in the future.

Such secondary batteries may be classified into lithium ion batteries, lithium ion polymer batteries, lithium polymer batteries, etc., depending on the composition of the electrode and the electrolyte, and among them, the amount of use of lithium-ion polymer batteries that are less likely to leak electrolyte and are easy to manufacture is on the increase. In general, secondary batteries are classified into cylindrical batteries and prismatic batteries in which an electrode assembly is embedded in a cylindrical or rectangular metal can, depending on the shape of a battery case, and pouch-type batteries in which the electrode assembly is embedded in a pouch-type case of an aluminum laminate sheet. The electrode assembly built into the battery case is composed of a positive electrode, a negative electrode, and a separator interposed between the positive electrode and the negative electrode, and is a power generating element capable of charging and discharging. The electrode assembly is classified into a jelly-roll type wound with a separator interposed between the positive electrode and the negative electrode which are long sheet-shaped and are coated with active materials, and a stack type in which a plurality of positive electrodes and negative electrodes of a predetermined size are sequentially stacked while a separator is interposed therebetween.

However, recently, the safety issue has come up in the process of increasing the capacity and energy density of secondary batteries. Specifically, as the capacity of the secondary battery becomes large, ignition or explosion accidents by overcharge, high temperature exposure, and external impact, etc. of various mobile devices, vehicles and energy storage systems (ESS) are frequently reported. The short circuit of the positive electrode and the negative electrode by an external stimulus is the cause of such accidents. When a secondary battery is exposed to overcharge or a high temperature, the inner temperature of the battery increases, which contracts the separator made of a polymer material, or an inner structure of the battery is broken by an external impact. In such cases, a short circuit occurs.

When such a short circuit occurs, generation of heat inside the battery is promoted as the movements of lithium ions and electrons are concentrated at the portion when the positive electrode directly contacts the negative electrode. In this case, the volume is expanded due to the generation of gases inside the battery, and the risk of ignition increases.

Therefore, there is a need for a technology for suppressing movements of electrons and ions of a battery circuit when the temperature inside the battery rises due to a short circuit.

### [Disclosure]

### [Technical Problem]

The present invention is believed to solve at least some of the above problems. For example, an aspect of the present invention provides an electrode capable of improving safety by preventing a thermal runaway phenomenon at the time of occurrence of an internal short circuit, and a method of manufacturing the same.

### [Technical Solution]

An electrode according to the present invention includes: a current collector including a main body and an electrode tab formed at one side of the main body; a conductive coating layer which is formed on at least one surface of the current collector and includes a conducting polymer of which resistance increases when a temperature rises; and an electrode mixture layer which is formed on the conductive coating layer. Herein, the conductive coating layer is formed on a region including both the main body and the electrode tab.

In a specific example, the conducting polymer may include a polythiophene-based polymer including at least one functional group selected from the group consisting of alkyl group, carboxyl group, hydroxy group, amine group, nitro group, ether group, and carbonyl group.

More specifically, the conducting polymer may include at least one selected from the group consisting of a polymerized unit represented by a following chemical formula 1 and a polymerized unit represented by a following chemical formula 2:

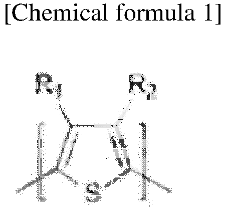

Herein, each of R₁ and R₂ is independently a hydrogen, a substituted or unsubstituted alkyl group having 1 to 20 carbon atoms, a carboxyl group, a hydroxy group, a amine group, a nitro group, an ether group or a carbonyl group.

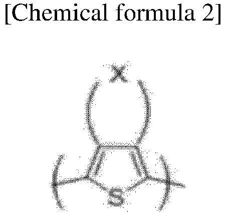

Herein, X is a functional group represented by a following chemical formula 3.

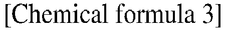

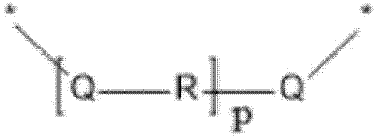

Herein, Q is an oxygen or sulfur atom, R is a substituted or unsubstituted alkylene group having 1 to 5 carbon atoms, and p is a natural number equal to or greater than 1.

At this time, the polymerized unit represented by the chemical formula 2 may be represented by a following chemical formula 4:

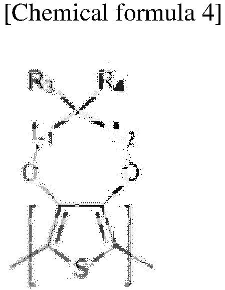

Herein, each of L₁ and L₂ is independently a substituted or unsubstituted alkylene group having 1 to 20 carbon atoms, and each of R₃ and R₄ is independently a hydrogen, an alkyl group having 1 to 20 carbon atoms, a carboxyl group, a hydroxy group, an amine group, a nitro group, an ether group, or a carbonyl group.

In a specific example, a thickness of the conductive coating layer may be in a range of 10 nm to 5 *µ*m.

Further, a pencil hardness of the conductive coating layer may be in a range of 8B to 2H.

In a specific example, the electrode mixture layer may be formed on a region including the main body.

Further, the present invention provides an electrode assembly, and the electrode assembly has a structure where at least one positive electrode and at least one negative electrode are laminated in a state that a separator is interposed therebetween. Herein, a positive electrode tab formed on the positive electrode and a negative electrode tab formed on the negative electrode may be joined by welding, and at least one of the positive electrode and the negative electrode may be the above-described electrode.

Further, the present invention provides a secondary battery including the above-described electrode assembly.

Further, the present invention provides a method of manufacturing an electrode.

A method of manufacturing an electrode according to the present invention includes: preparing a current collector including a main body and an electrode tab formed at one side of the main body; coating a coating liquid, which is obtained by dissolving a conducting polymer of which resistance increases when a temperature rises, in an organic solvent, on a current collector; forming a conductive coating layer by drying the current collector having the coating liquid coated thereon; and forming an electrode mixture layer by coating an electrode mixture including an electrode active material, on the conductive coating layer. Herein, the coating liquid may be coated on a region including both the main body and the electrode tab.

Specifically, the conducting polymer may include at least one selected from the group consisting of a polymerized unit represented by a following chemical formula 1 and a polymerized unit represented by a following chemical formula 2:

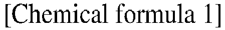

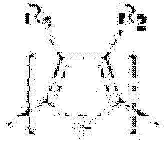

Herein, each of R₁ and R₂ is independently a hydrogen, a substituted or unsubstituted alkyl group having 1 to 20 carbon atoms, a carboxyl group, a hydroxy group, a amine group, a nitro group, an ether group or a carbonyl group.

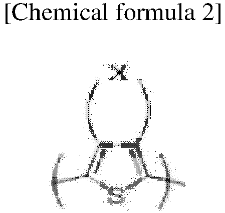

Herein, X is a functional group represented by a following chemical formula 3.

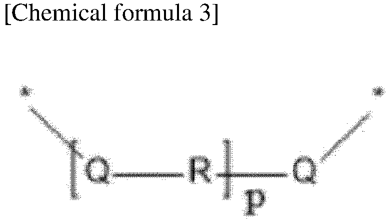

Herein, Q is an oxygen or sulfur atom, R is a substituted or unsubstituted alkylene group having 1 to 5 carbon atoms, and p is a natural number equal to or greater than 1.

At this time, the polymerized unit represented by the chemical formula 2 may be represented by a following chemical formula 4:

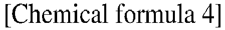

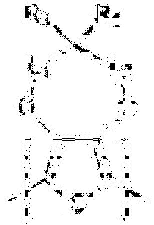

Herein, each of L₁ and L₂ is independently a substituted or unsubstituted alkylene group having 1 to 20 carbon atoms, and each of R₃ and R₄ is independently a hydrogen, an alkyl group having 1 to 20 carbon atoms, a carboxyl group, a hydroxy group, an amine group, a nitro group, an ether group, or a carbonyl group.

Further, a pencil hardness of the conductive coating layer may be in a range of 8B to 2H.

### [Advantageous Effects]

According to the electrode of the present invention, when a conductive coating layer including a conducting polymer of which resistance increases when a temperature rises is formed on a current collector, and the conductive coating layer is formed not only on the main body of the current collector, but also on the electrode tab part, the thermal runaway phenomenon when the battery temperature rises is reduced, thereby improving the safety of the battery.

### [Brief Description of the Drawings]

FIG. 1 is a cross-sectional view illustrating a structure of an electrode according to the present invention.
FIG. 2 is a plan view showing the shape of a current collector.

### [Detailed Description of the Preferred Embodiments]

Hereinafter, the present invention will be described in detail with reference to the drawings. The terms and words used in the present specification and claims should not be construed as limited to ordinary or dictionary terms and the inventor may properly define the concept of the terms in order to best describe its invention. The terms and words should be construed as meaning and concept consistent with the technical idea of the present invention.

In this application, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof. Also, when a portion such as a layer, a film, an area, a plate, etc. is referred to as being "on" another portion, this includes not only the case where the portion is "directly on" the another portion but also the case where further another portion is interposed therebetween. On the other hand, when a portion such as a layer, a film, an area, a plate, etc. is referred to as being "under" another portion, this includes not only the case where the portion is "directly under" the another portion but also the case where further another portion is interposed therebetween. In addition, to be disposed "on" in the present application may include the case disposed at the bottom as well as the top.

Hereinafter, the present invention will be described in detail with reference to the drawings.

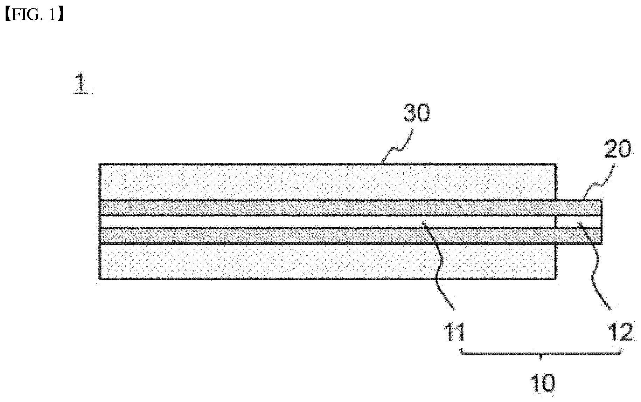

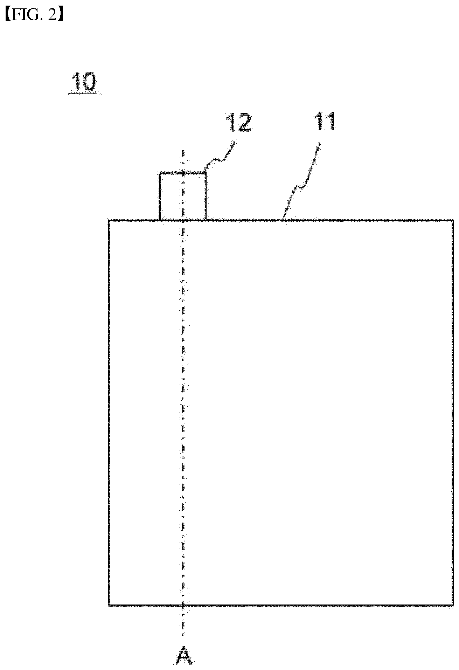

FIG. 1 is a cross-sectional view illustrating a structure of an electrode according to the present invention, and FIG. 2 is a plan view showing the shape of a current collector. FIG. 1 shows a cross-section of part A in an electrode having a conductive coating layer and an electrode mixture layer formed on the current collector of FIG. 2.

Referring to FIGS. 1 and 2, an electrode 1 according to the present invention includes a current collector 12 including a main body 11 and an electrode tab 12 formed at one side of the main body 11.

The current collector is not particularly limited as long as it has high conductivity without causing chemical changes in the battery. Examples of the negative electrode current collector include copper, stainless steel, aluminum, nickel, titanium, calcined carbon, copper or stainless steel of which the surface has been treated with carbon, nickel, titanium, silver or the like, an aluminum-cadmium alloy, or the like. In addition, the current collector may have a thickness of 3 to 500 *µ*m, and fine unevenness may be formed on the surface of the current collector to thereby increase the coupling force with the electrode active material to be described later. For example, the electrode current collector may be used as various forms such as a film, a sheet, a foil, a net, a porous body, a foam, and a nonwoven fabric.

At this time, in the present invention, the current collector 10 includes a main body 11 and an electrode tab 12 formed at one side of the main body 11 as shown in FIG. 2. The electrode tab 12 may be formed integrally with the main body 11 at the time of manufacturing a current collector or may be manufactured separately from the main body 11 and then joined by welding.

Further, the conductive coating layer 20 is formed on at least one surface of the current collector 10. The conductive coating layer 20 may include a conducting polymer of which the resistance increases as the temperature rises. Namely, the conductive coating layer 20 is interposed between the electrode mixture layer 30 and the current collector 10 to be described later, and usually acts as a conductor, but when the temperature rises, the conductive coating layer 20 may prevent a damage to products and ignition due to overcurrent by blocking electric current by the rise of resistance.

In a specific example, the conducting polymer may include a polythiophene-based polymer. Such a polythiophene-based polymer is suitable for the conductive coating layer according to the present invention because it can appropriately control side reaction with the electrolyte solution while showing excellent conduction characteristics, and shows PTC effects when the temperature rises.

Specifically, such a polythiophene-based polymer may show electrical conductivity as anions are doped or dedoped under an electrolyte solution environment and may conversely show resistance to electricity.

Generally, a lithium salt such as LiPF₆ is included in an electrolyte solution. The polythiophene-based polymer is oxidized by anions of the lithium salt at a temperature less than a predetermined temperature and has electric charge, thereby showing electronic conductivity. Further, when the temperature rises to a certain temperature, reaction occurs in a direction opposite to what has been described above, and electronic conductivity is not shown as anions of the lithium salt are dedoped. Namely, when the temperature rises, the resistance increases, and it becomes a non-conductor. At this time, the range in which the polythiophene-based polymer shows electronic conductivity is determined by the oxidation potential of the polymer itself, and this can be appropriately adjusted by the functional group included in the polythiophene-based polymer and the composition.

Herein, since typical thiophenic polymers have a disadvantage that liquidity and dispersibility are low in a coating liquid, the adhesive force to the current collector of the conductive coating layer can be reduced when thiophenic polymers are coated on the current collector.

As such, in the present invention, the polythiophene-based polymer may include at least one functional group selected from the group consisting of alkyl group, carboxyl group, hydroxy group, amine group, nitro group, ether group, and carbonyl group. The functional group increases the dispersibility and the coatability of the conducting polymer at the time of forming a conductive coating layer.

In the present invention, the alkyl group, carboxyl group, hydroxy group, amine group, nitro group, ether group, and carbonyl group each may be alkyl group, carboxyl group, hydroxy group, amine group, nitro group, ether group, and carbonyl group itself, or a functional group containing alkyl group, carboxyl group, hydroxy group, amine group, nitro group, ether group, or carbonyl group. For example, the functional group containing the alkyl group, carboxyl group, hydroxy group, amine group, nitro group, ether group, and carbonyl group may include what is obtained as alkyl group, alkylene group, alkoxy group, alkenyl group, alkynylene group, aryl group, or the like is substituted with at least one selected from the group consisting of alkyl group, carboxyl group, hydroxy group, amine group, nitro group, ether group, and carbonyl group.

In one example, the conducting polymer may include at least one selected from the group consisting of a polymerized unit represented by a following chemical formula 1 and a polymerized unit represented by a following chemical formula 2:

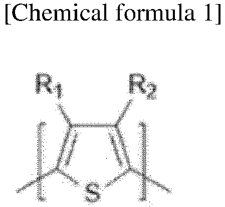

Herein, each of R₁ and R₂ is independently a hydrogen, a substituted or unsubstituted alkyl group having 1 to 20 carbon atoms, a carboxyl group, a hydroxy group, a amine group, a nitro group, an ether group or a carbonyl group.

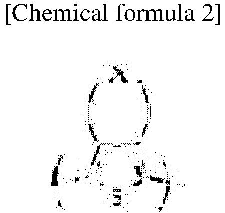

Herein, X is a functional group represented by a following chemical formula 3.

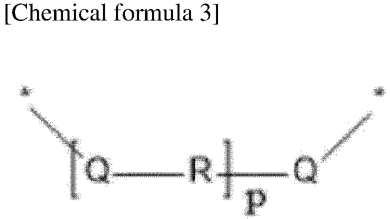

Herein, Q is an oxygen or sulfur atom, R is a substituted or unsubstituted alkylene group having 1 to 5 carbon atoms, and p is a natural number equal to or greater than 1.

In the chemical formula 1, R₁ and R₂ may independently be an alkyl group having 1 to 20 carbon atoms, 1 to 16 carbon atoms, 1 to 12 carbon atoms, 1 to 8 carbon atoms, or 1 to 4 carbon atoms. The alkyl group may be linear, branched, or cyclic, and suitably linear or branched.

Further, the p may be a natural number in a range of 1 to 10, 1 to 8, 1 to 6, or 1 to 4.

More specifically, the polymerized unit represented by the chemical formula 2 may be represented by a following chemical formula 4:

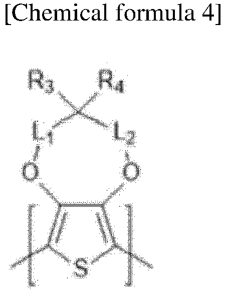

Herein, each of L₁ and L₂ is independently a substituted or unsubstituted alkylene group having 1 to 20 carbon atoms, and each of R₃ and R₄ is independently a hydrogen, an alkyl group having 1 to 20 carbon atoms, a carboxyl group, a hydroxy group, an amine group, a nitro group, an ether group, or a carbonyl group.

In the chemical formula 4, L₁ and L₂ may independently be a substituted or unsubstituted alkylene group having 1 to 20 carbon atoms, 1 to 16 carbon atoms, 1 to 12 carbon atoms, 1 to 8 carbon atoms, or 1 to 4 carbon atoms. The alkyl group may be linear, branched, or cyclic, and suitably linear or branched.

Further, the R₃ and R₄ each may independently be an alkyl group having 1 to 20 carbon atoms, 1 to 16 carbon atoms, 1 to 12 carbon atoms, 1 to 8 carbon atoms, or 1 to 4 carbon atoms, a carboxyl group, a hydroxy group, an amine group, a nitro group, an ether group, or a carbonyl group.

Herein, the statement of including at least one selected from the polymerized unit represented by the chemical formula 1 and the polymerized unit represented by the chemical formula 2 may indicate that the polymer includes only one or both of the polymerized unit represented by the chemical formula 1 and the polymerized unit represented by the chemical formula 2. At this time, the statement that the conducting polymer includes both kinds of polymerized units indicates that the conducting polymer is a mixture of a polymer including a polymerized unit represented by the chemical formula 1 and a polymer including a polymerized unit represented by the chemical formula 2, or is a copolymer of the polymerized unit represented by the chemical formula 1 and the polymerized unit represented by the chemical formula 2. In this case, the oxidation potential of the conducting polymer can be adjusted by adjusting the ratio (e.g., molar ratio) of the polymerized unit according to the chemical formula 1 to the polymerized unit according to the chemical formula 2.

The oxidation potential of the conducting polymer is related to the temperature range (transition temperature) in which the resistance increases. Specifically, when the oxidation potential of the conducting polymer decreases, the transition temperature rises, and when the oxidation potential increases, the transition temperature decreases. Namely, the operating temperature range of the conductive coating layer can be adjusted by adjusting the ratio of the polymerized units, through which the battery function can be maintained even at a high temperature, and the ignition can be suppressed by blocking the battery function when there is a possibility of ignition as the temperature further rises. At this time, the oxidation potential of the polymer including the polymerized unit represented by the chemical formula 2 is lower than that of the polymer including the polymerized unit represented by the chemical formula 1. Hence, in order to reduce the oxidation potential of the conducting polymer, it is possible to increase the ratio of the polymerized unit represented by the chemical formula 2.

At this time the oxidation potential of the conducting polymer may be in the range of 2.0 to 3.8 eV, 2.0 to 3.75 eV, or 2.0 to 3.7 eV. When the oxidation potential of the conducting polymer exceeds the above range, a storage stability at a high temperature of 70°C or higher can be reduced.

The weight average molecular weight (Mw) of the conducting polymer may be in the range of 500 to 100,000, 2,000 to 90,000, 4,000 to 80,000, 6,000 to 70,000, 8,000 to 60,000, or 10,000 to 50,000, but the present invention is not limited to these examples. The weight average molecular weight may be measured by gel chromatography (GPC). When the weight average molecular weight of the conducting polymer is in the above range, the dispersibility and coatability of the polymer in the organic solvent may be improved at the time of forming a conducting polymer.

Further, in the electrode according to the present invention, the conducting polymer may be electrically neutral. Herein, the wording "electrically neutral" indicates that the conducting polymer does not exist in the form of salt together with other cations or anions before oxidized by the electrolyte solution. In this case, oxidation reaction by the electrolyte solution is impossible, and when the temperature rises thereafter, the resistance increase by the dedoping of the anions becomes impossible. The conducting polymer exists in a molecule form, which is electrically neutral, before being oxidized by the electrolyte solution, and the electric conductivity is secured as the anions of the lithium salt are doped under the existence of the electrolyte solution. When the temperature rises to a temperature equal to or greater than a certain temperature, the anions are dedoped, thereby securing the electric insulation.

Further, as described above, the current collector 10 used for the electrode according to the present invention has an electrode tab 12 formed on one side of the main body 11. The conductive coating layer 20 may be formed on a region including both the main body 11 and the electrode tab 12. This means that the conductive coating layer 20 should be coated on the electrode tab 12 as well as the main body 11. This is to minimize the risk of thermal runaway even when an internal short circuit occurs by forming a conductive coating layer 20.

The positive electrodes and negative electrodes inside a general electrode assembly are electrically connected to each other by the positive electrode tab and the negative electrode tab, respectively. When an internal short circuit occurs, the temperature of the electrode rises as described above, and the electric current is blocked by the conductive coating layer formed on at least one surface of the current collector. Further, when a conductive coating layer is not formed on an electrode tab part, the positive electrode and the negative electrode are electrically connected to each other by a contact portion of the electrode tab, which further increases the risk of thermal runaway. In the present invention, since a conductive coating layer is formed even on an electrode tab part, a contact between electrode tabs is blocked or minimized, thereby minimizing the risk of thermal runaway at the time of an internal short circuit.

The conductive coating layer 20 may be formed by coating a coating liquid, which is obtained by dissolving a conducting polymer in an organic solvent, on a current collector as will be described later. At this time, the thickness of the conductive coating layer may be in the range of 10 nm to 5 *µ*m, 50 nm to 2 *µ*m, 100 nm to 1 *µ*m, or 300 nm to 0.8 *µ*m. When the thickness of the conductive coating layer is in the above range, it is possible to effectively block the electric current when the temperature rises while not interfering with the function of the electrode. When the thickness of the conductive coating layer goes beyond the above range and is excessively small, the conductive coating layer may be easily damaged on the electrode, and the electrode mixture layer may directly contact the current collector, thereby decreasing the effects of the present invention. When the thickness of the conductive coating layer goes beyond the above range and is excessively large, the conductive coating layer itself acts as a resistance, and the performance of the electrode may decrease.

Further, a pencil hardness of the conductive coating layer 20 may be in a range of 8B to 2H. More specifically, the pencil hardness may be in the range of 7B to H, 6B to F, 5B to B, or 4B to 2B. When the pencil hardness is in the above range, the electrode tab can be easily welded despite the existence of the conductive coating layer while maintaining the morphological stability of the conductive coating layer. When the pencil hardness is less than 8B, the conductive coating layer is excessively soft and may be easily damaged by an external impact, and when the pencil hardness exceeds 2H, the conductive coating layer is excessively hard and the welding may become impossible. The pencil hardness may be determined according to the type of the conducting polymer constituting the conductive coating layer, and the composition of the conductive coating layer. For example, it is possible to increase the pencil hardness by using a small chain (R₁ to R₄) which is coupled to the polythiophene-based polymer.

Further, the conductive coating layer 20 may further include a binder polymer in addition to the conducting polymer.

The binder polymer allows the conductive coating layer to be better attached on the current collector, and the material used for the electrode mixture layer to be described later may be used for the binder polymer. When the conductive coating layer further includes a binder polymer, the content of the binder polymer contained in the conductive coating layer may be equal to or less than 5 wt%, 3 wt%, or 1 wt% of the total weight of the conductive coating layer.

Further, the electrode mixture layer 30 is formed on the conductive coating layer and may contain an electrode active material, a binder and a conductive material, etc. The electrode active material may be a positive electrode active material or a negative electrode active material.

In the present invention, the positive electrode active material is a material capable of causing an electrochemical reaction and a lithium transition metal oxide, and contains two or more transition metals. Examples thereof include: layered compounds such as lithium cobalt oxide (LiCoO₂) and lithium nickel oxide (LiNiO₂) substituted with one or more transition metals; lithium manganese oxide substituted with one or more transition metals; lithium nickel oxide represented by the formula LiNi_{1-y}M_{y}O₂ (wherein M = Co, Mn, Al, Cu, Fe, Mg, B, Cr, Zn or Ga and contains at least one of the above elements, 0.01 ≦ y ≦ 0.7); lithium nickel cobalt manganese composite oxide represented by the formula Li_{1+z}Ni_{b}Mn_{c}Co₁-_{(b+c+d)}M_{d}O₍₂₋ₑ₎Aₑ such as Li_{1+z}Ni_{1/3}CO_{1/3}Mn_{1/3}O₂, Li_{1+z}Ni_{0.4}Mn_{0.4}CO_{0.2}O₂ etc. (wherein - 0.5≤z≤0.5, 0.1≤b≤0.8, 0.1≤c≤0.8, 0≤d≤0.2, 0≤e≤0.2, b+c+d<1, M = Al, Mg, Cr, Ti, Si or Y, and A = F, P or Cl); olivine-based lithium metal phosphate represented by the formula Li₁₊ₓM_{1-y}M'_{y}PO_{4-z}X_{z} (wherein M = transition metal, preferably Fe, Mn, Co or Ni, M'= Al, Mg or Ti, X = F, S or N, and -0.5≤x≤0.5, 0≤y≤0.5, 0≤z≤0.1).

Examples of the negative electrode active material include carbon such as non-graphitized carbon and graphite carbon; metal complex oxide such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, groups 1, 2, and 3 of the periodic table, halogen; 0<x≤1; 1≤y≤3; 1≤z≤8); lithium alloy; silicon alloy; tin alloy; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; and Li-Co-Ni-based materials.

The conductive material is usually added in an amount of 1 to 30% by weight based on the total weight of the mixture including the positive electrode active material. Such a conductive material is not particularly limited as long as it has electrical conductivity without causing a chemical change in the battery, and examples thereof include graphite such as natural graphite and artificial graphite; carbon black such as carbon black, acetylene black, Ketjen black, channel black, furnace black, lamp black, and summer black; conductive fibers such as carbon fiber and metal fiber; metal powders such as carbon fluoride, aluminum and nickel powder; conductive whiskey such as zinc oxide and potassium titanate; conductive metal oxides such as titanium oxide; and conductive materials such as polyphenylene derivatives and the like.

The binder is added in an amount of 1 to 30% by weight, on the basis of the total weight of the mixture containing the positive electrode active material, as a component that assists in bonding between the active material and the conductive material and bonding to the current collector. Examples of such binders include polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene terpolymer (EPDM), sulfonated EPDM, styrene butylene rubber, fluorine rubber, various copolymers and the like.

The electrode mixture layer 30 may be formed on a region including the main body 11 as shown in FIGS. 1 and 2. Namely, the electrode mixture layer 30 may be formed on only the main body 11 and may not be formed on the electrode tab 12. As such, the conductive coating layer 20 and the electrode mixture layer 30 are sequentially formed on the main body 11 of the current collector 10, and only the conductive coating layer 20 may be formed on the electrode tab 12. Likewise, the electrode mixture layer is not formed on the electrode tab in order to prevent fragments including the electrode active material from being detached from the electrode mixture layer at the time of welding.

Further, the present invention provides an electrode assembly including the electrode described above.

Specifically, the electrode assembly has a structure where at least one positive electrode and at least one negative electrode are laminated in a state a separator is interposed therebetween. The positive electrode tab formed on the positive electrode and the negative electrode tab formed on the negative electrode are coupled by welding, and at least one of the positive electrode and the negative electrode may have a structure where a conductive coating layer is formed as described above.

In the present invention, a conductive coating layer including a conducting polymer, of which resistance increases when a temperature rises, is formed on the electrode tab as well as the main body of the current collector. As such, it is possible to minimize the risk of thermal runaway by blocking or minimizing electric connection between electrode tabs when a temperature rises due to the internal short circuit. Further, the welding of the electrode tab may be more easily performed by setting the pencil hardness of the conductive coating layer to be in the range of 8B to 2H.

The separator may be formed of an insulating thin film having high ion permeability and mechanical strength. The pore diameter of the separator is generally 0.01 to 10 micrometers, and the thickness is generally 5 to 300 micrometers. Examples of such a separator include olefin-based polymers such as polypropylene which is chemically resistant and hydrophobic; a sheet or a nonwoven fabric made of glass fiber, polyethylene or the like.

Further, the separator may be a safety reinforced separator (SRS). The SRS has a structure where organic/inorganic complex porous coating layer is coated on a polyolefin-based separator substrate.

The same as what is disclosed in Korean Patent Application No. 10-2009-0018123 may be used for inorganic particles and binder polymers which form an organic/inorganic complex porous coating layer of such an SRS.

In addition, the present invention provides a secondary battery including the above described electrode assembly. The secondary battery has a structure where the electrode assembly is accommodated in a battery case, an electrolyte solution is injected into the battery case, and the battery case is sealed, and the secondary battery may be classified into a cylindrical battery cell, a prismatic battery cell, a pouch-shaped battery cell, and the like. Details of thereof are known to those of ordinary skill in the art, and thus detailed description thereof will be omitted.

The present invention also provides a method for manufacturing the electrode described above.

A method of manufacturing an electrode according to the present invention includes: preparing a current collector including a main body and an electrode tab formed at one side of the main body; coating a coating liquid, which is obtained by dissolving a conducting polymer of which resistance increases when a temperature rises, in an organic solvent, on a current collector; forming a conductive coating layer by drying the current collector having the coating liquid coated thereon; and forming an electrode mixture layer by coating an electrode mixture including an electrode active material, on the conductive coating layer. Herein, the coating liquid may be coated on a region including both the main body and the electrode tab.

In the present invention, a conductive coating layer including a conducting polymer, of which resistance increases when a temperature rises, is formed on the electrode tab as well as the main body of the current collector. As such, it is possible to minimize the risk of thermal runaway by blocking or minimizing electric connection between electrode tabs when a temperature rises due to the internal short circuit.

Hereinafter, a method of manufacturing an electrode according to the present invention will be described in detail.

First, a current collector is prepared. The current collector may include a main body and an electrode tab formed on one side of the main body.

Thereafter, a coating liquid containing a conducting polymer is prepared. The coating liquid may be manufactured by dissolving a conducting polymer in an organic solvent at a certain concentration.

In the present invention, the conducting polymer may include at least one selected from the group consisting of a polymerized unit represented by a following chemical formula 1 and a polymerized unit represented by a following chemical formula 2:

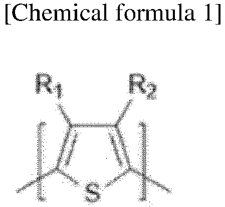

Herein, each of R₁ and R₂ is independently a hydrogen, a substituted or unsubstituted alkyl group having 1 to 20 carbon atoms, a carboxyl group, a hydroxy group, a amine group, a nitro group, an ether group or a carbonyl group.

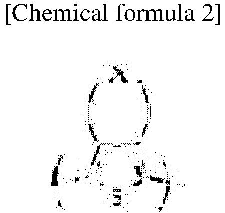

Herein, X is a functional group represented by a following chemical formula 3.

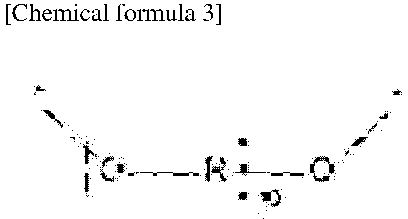

Herein, Q is an oxygen or sulfur atom, R is a substituted or unsubstituted alkylene group having 1 to 5 carbon atoms, and p is a natural number equal to or greater than 1.

At this time, the polymerized unit represented by the chemical formula 2 may be represented by a following chemical formula 4:

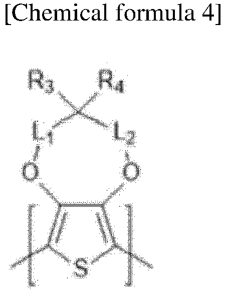

Herein, each of L₁ and L₂ is independently a substituted or unsubstituted alkylene group having 1 to 20 carbon atoms, and each of R₃ and R₄ is independently a hydrogen, an alkyl group having 1 to 20 carbon atoms, a carboxyl group, a hydroxy group, an amine group, a nitro group, an ether group, or a carbonyl group.

Details of the conducting polymer are the same as described above.

At this time, any organic solvent may be used as long as it can dissolve a conducting polymer. For example, ethyl acetate, chloroform, dichloromethane, tetrahydrofuran, or n-methyl-2-pyrrolidone may be used.

Herein, the content of the conducting polymer of the coating liquid may be in the range of 0.1 to 10 wt%, 0.1 to 7 wt%, or 0.1 to 5 wt% of the total weight of the coating liquid. When the content of the conducting polymer is less than 0.1 wt%, it is difficult to form a conductive coating layer because the content is excessively small. When the content of the conducting polymer exceeds 10 wt%, the dispersibility of the conducting polymer may decrease in the organic solvent.

When a coating liquid is prepared, the coating liquid is coated on the current collector. As described above, the coating liquid may be coated on a region including both the main body of the current collector, and the electrode tab. At this time, the pencil hardness of the conductive coating layer may be set to be in the range of 8B to 2H. More specifically, the pencil hardness may be in the range of 7B to H, 6B to F, 5B to B, or 4B to 2B. When the pencil hardness is in the above range, the electrode tab can be easily welded despite the existence of the conductive coating layer while maintaining the morphological stability of the conductive coating layer.

At this time, the pencil hardness of the conductive coating layer formed on the main body may be set to be different from the pencil hardness of the conductive coating layer formed on the electrode tab. In this case, coating liquids having different compositions may be coated on the main body and the electrode tab. The details about this are the same as described above.

After the coating liquid is coated, a conductive coating layer may be formed by removing the organic solvent by drying the coating liquid, and an electrode mixture layer may be formed on the conductive coating layer. The electrode mixture layer may be formed by coating an electrode slurry including an electrode active material, a conductive material and a binder on a conductive coating layer. At this time, it is possible for the electrode mixture layer to be formed on only a region including the main body by coating the electrode slurry on only the main body and not coating the electrode slurry on the electrode tab. When an electrode slurry is coated, the electrode slurry may be dried and rolled to thereby manufacture an electrode.

Hereinafter, the present invention will be described in detail with reference to examples. However, the embodiments according to the present invention may be modified into various other forms, and the scope of the present invention should not be construed as being limited to the examples described below. The examples of the present invention are provided to more fully describe the present invention to those skilled in the art.

### [Example 1]

### Synthesis of conducting polymer and preparation of coating liquid

A conducting polymer was synthesized according to the following reaction formula 1.

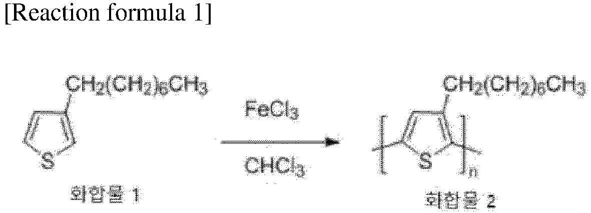

Specifically, 3-Octylthiophene (compound 1) of 1g (5.093 mmol, 1eq) as a monomer was injected into a solution, which was obtained by dissolving iron(III) chloride of 2.48g (15.3 mmol, 3eq) in chloroform of 70 mL, which was then stirred for 24 hours. The mixed solution was poured in a space having an osmotic membrane of molecular weight of cut-off (MWCO) of 5000, which was then immersed in acetonitrile of 200 mL to thereby selectively remove unreacted iron(III) chloride and remaining reactants. Conducting polymers, which have the same structure as that of the compound 2 and have a weight average molecular weight of 9,200, were obtained by washing the residue, which was precipitated inside the osmotic membrane, with methanol, and drying it at a room temperature.

A coating liquid of 1 wt% was manufactured by dissolving the conducting polymers in chloroform. Thereafter, the coating liquid was filtered using a PTFE filter having pores of a 1 *µ*m pore size.

### Preparation of electrode

The coating liquid was coated on both the main body and the electrode tab of the current collector, which was made of Al and had the thickness of 20 *µ*m, to have a thickness of 1 *µ*m, which was then dried, to thereby form a conductive coating layer. At this time, the pencil hardness of the conductive coating layer was 3B. The pencil hardness was measured in the case that the surface was not damaged when the conductive coating layer was scratched at 45 degrees with the load of 0.75 kg on the basis of ASTM D3363 using a pencil hardness tester (Cometech).

Thereafter, a positive electrode active material slurry, which was manufactured by mixing NCM-based positive electrode active material (Li[Ni_{0.6}CO_{0.2}Mn_{0.2}]O₂) of 75 wt%, carbon black of 1 wt% as a conductive material, PVDF of 1 wt% as a binder, and NMP of 23 wt% as a solvent, was coated on a region including a main body to have a thickness of 40 *µ*m. This was dried at a room temperature and was then dried again under a vacuum condition of 120°C, to thereby manufacture a positive electrode.

### [Example 2]

A conducting polymer was synthesized and a coating liquid was prepared according to the following reaction formula 2.

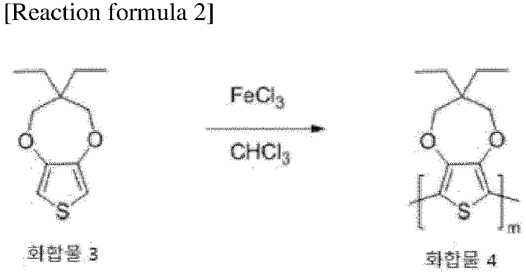

Specifically, compound 3 of 1g (4.71 mmol, 1eq) as a monomer was injected into a solution, which was obtained by dissolving iron(III) chloride of 2.29g (14.1 mmol, 3eq) in chloroform of 650 mL, which was then stirred for 24 hours. The mixed solution was poured in a space having an osmotic membrane of molecular weight of cut-off (MWCO) of 5000, which was then immersed in acetonitrile of 200 mL to thereby selectively remove unreacted iron(III) chloride and remaining reactants. Conducting polymers, which have the same structure as that of the compound 4 and have a weight average molecular weight of 7,600, were obtained by washing the residue, which was precipitated inside the osmotic membrane, with methanol, and drying it at a room temperature.

A coating liquid of 1 wt% was manufactured by dissolving the conducting polymers in chloroform. Thereafter, the coating liquid was filtered using a PTFE filter having pores of a 1 *µ*m pore size.

The coating liquid was coated on both the main body and the electrode tab of the current collector, which was made of Al and had the thickness of 20 *µ*m, to have a thickness of 1 *µ*m, which was then dried, to thereby form a conductive coating layer. At this time, the pencil hardness of the conductive coating layer was 2B.

Thereafter, a positive electrode active material slurry, which was manufactured by mixing NCM-based positive electrode active material (Li[Ni_{0.6}CO_{0.2}Mn_{0.2}]O₂) of 75 wt%, carbon black of 1 wt% as a conductive material, PVDF of 1 wt% as a binder, and NMP of 23 wt% as a solvent, was coated on a region including a main body to have a thickness of 40 *µ*m. This was dried at a room temperature and was then dried again under a vacuum condition of 120°C, to thereby manufacture a positive electrode.

### [Example 3]

A positive electrode was manufactured in the same manner as in the example 1 except that the copolymer of the monomer (compound 1) of the conducting polymer used in the example 1 and the monomer (compound 2) of the conducting polymer used in the example 2 was used as the conducting polymer. At this time, the molar ratio of compound 1 to compound 2 was 10: 90, and the pencil hardness of the conductive coating layer was 2B.

### [Comparative Example 1]

A positive electrode was manufactured in the same manner as in the example 1 except that the coating liquid, which includes the conducting polymer manufactured in the example 1, was coated on only the main body and was not coated on the electrode tab.

### [Comparative Example 2]

A positive electrode was manufactured in the same manner as in the example 1 except that the coating liquid, which includes the conducting polymer manufactured in the example 2, was coated on only the main body and was not coated on the electrode tab.

### [Comparative Example 3]

A positive electrode was manufacture in the same manner as in the example 1 except that BPDA-ODA-based polyamide polymer as in the chemical formula 5 was used as the polymer used for the coating liquid. At this time, the pencil hardness of the coating layer was 3H.

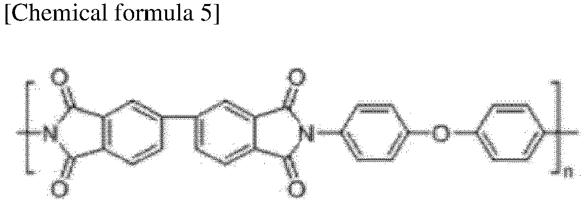

### [Comparative Example 4]

A positive electrode was manufacture in the same manner as in the example 1 except that TPA-ODA-based polyamide polymer as in the chemical formula 6 was used as the polymer used for the coating liquid. At this time, the pencil hardness of the coating layer was 4H.

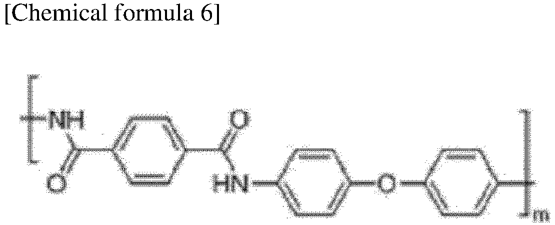

### [Experimental Example 1]

A negative electrode mixture was prepared by mixing 97.6 parts by weight of artificial graphite and natural graphite that function as negative electrode active materials (weight ratio: 90 : 10), 1.2 parts by weight of styrene-butadiene rubber (SBR) that functions as a binder, and 1.2 parts by weight of carboxymethyl cellulose (CMC). The negative electrode mixture slurry was prepared by dispersing the negative electrode mixture in ion-exchanged water functioning as a solvent. A negative electrode was prepared by coating, drying, and pressing the slurry on both sides of an copper foil having a thickness of 20 *µ*m.

An electrode assembly was prepared by laminating the positive electrode and the negative electrode prepared above in a manner than allows a porous polyethylene separator to be interposed between the positive electrode and the negative electrode.

At this time, electrode tabs formed on the positive electrode were coupled through welding, and at this time, whether the electrode tab can be welded was determined, and the result was shown in Table 1. When the welding of the electrode tab is possible, it is indicated by "O", and when it is impossible, it is indicated by "X".

### [Experimental Example 2]

A non-aqueous electrolyte solution was prepared by dissolving LiPF₆ in an organic solvent, in which ethylene carbonate (EC), propylene carbonate (PC), and diethyl carbonate (DEC) were mixed in a composition of 3 : 3 : 4 (volume ratio). Herein, LiPF₆ was dissolved in the organic solvent to be a concentration of 1.0M.

Thereafter, after accommodating the electrode assembly in a pouch, an electrolyte solution was injected into the pouch to thereby manufacture two battery cells.

After charging the two battery cells to reach SOC 100%, they were put in an oven having an inner temperature of 25°C and 100°C, respectively, and EIS was measured. At this time, when the resistance value at 120°C is equal to or less than 2 times of the resistance value at 25°C, it is indicated by "X". When it is between 2 times 10 times, it is indicated by "Δ". When it is equal to or greater than 10 times, it is indicated by "O". The resistance was measured at the frequency of 300,000 to 0.1 Hz and AC amplitude of 10 mA using Solartron analytical EIS.

**[Table 1]**

| | Pencil hardness | Whether electrode tab has been coated | Whether welding is possible | Whether resistance has increased |
|---|---|---|---|---|
| Example 1 | 3B | O | O | O |
| Example 2 | 2B | O | O | O |
| Example 3 | 2B | O | O | O |
| Comparative Example 1 | 3B | X | O | X |
| Comparative Example 2 | 2B | X | O | X |
| Comparative Example 3 | 3H | O | X | - |
| Comparative Example 4 | 4H | O | X | - |

Referring to Table 1, since the conductive coating layer was formed on the electrode tab part in the electrode according to the examples, the resistance of the battery cell relatively significantly increased when the inner temperature of the battery rose, compared to comparative examples 1 and 2 where the conductive coating layer was not formed on the electrode tab part. In the comparative examples 1 and 2, since the electrodes are electrically connected by a portion where electrode tabs contact at the time of a short circuit, the increase in resistance was not large, which could cause a thermal runaway at the time of an internal short circuit. On the other hand, in the case of examples 1 to 3, the pencil hardness of the conductive coating layer was equal to or less than 2H. In this case, the welding of the electrode tab was possible. On the other hand, in the case of comparative examples 3 and 4, the pencil hardness was equal to or greater than 3H, and the welding was impossible because the conductive coating layer was too hard.

As described above, according to the electrode of the present invention, when a conductive coating layer including a conducting polymer of which resistance increases when a temperature rises is formed on a current collector, the conductive coating layer is formed not only on the main body of the current collector, but also on the electrode tab part, which reduces the thermal runaway phenomenon when the battery temperature rises, thereby improving the safety of the battery.

The above description is merely illustrative of the technical idea of the present invention, and those skilled in the art to which the present invention pertains may make various modifications and variations without departing from the essential characteristics of the present invention. Therefore, the drawings disclosed in the present invention are not intended to limit the technical idea of the present invention but to describe the present invention, and the scope of the technical idea of the present invention is not limited by these drawings. The scope of protection of the present invention should be interpreted by the following claims, and all technical ideas within the scope equivalent thereto should be construed as being included in the scope of the present invention.

On the other hand, in this specification, terms indicating directions such as up, down, left, right, before, and after are used, but it is obvious that these terms are for convenience of description only and may change depending on the location of the object or the location of the observer.

### [Description of reference numerals]

1: electrode
10: current collector
11: main body
12: electrode tab
20: conductive coating layer
30: electrode mixture layer

## Claims

1. An electrode comprising:
a current collector including a main body and an electrode tab formed at one side of the main body;
a conductive coating layer which is formed on at least one surface of the current collector and includes a conducting polymer of which resistance increases when a temperature rises; and
an electrode mixture layer which is formed on the conductive coating layer,
wherein the conductive coating layer is formed on a region including both the main body and the electrode tab.

2. The electrode of claim 1, wherein the conducting polymer includes a polythiophene-based polymer including at least one functional group selected from the group consisting of alkyl group, carboxyl group, hydroxy group, amine group, nitro group, ether group, and carbonyl group.

3. The electrode of claim 1, wherein the conducting polymer includes at least one selected from the group consisting of a polymerized unit represented by a following chemical formula 1 and a polymerized unit represented by a following chemical formula 2: 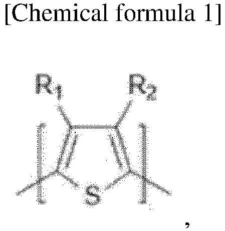 wherein each of R₁ and R₂ is independently a hydrogen, a substituted or unsubstituted alkyl group having 1 to 20 carbon atoms, a carboxyl group, a hydroxy group, a amine group, a nitro group, an ether group or a carbonyl group; and 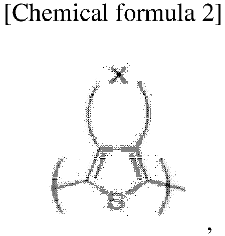 wherein X is a functional group represented by a following chemical formula 3: 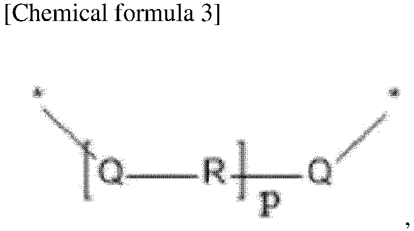 wherein Q is an oxygen or sulfur atom, R is a substituted or unsubstituted alkylene group having 1 to 5 carbon atoms, and p is a natural number equal to or greater than 1.

4. The electrode of claim 3, wherein the polymerized unit represented by the chemical formula 2 is represented by a following chemical formula 4: 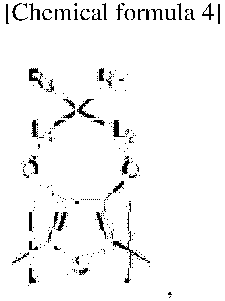 wherein each of L₁ and L₂ is independently a substituted or unsubstituted alkylene group having 1 to 20 carbon atoms, and each of R₃ and R₄ is independently a hydrogen, an alkyl group having 1 to 20 carbon atoms, a carboxyl group, a hydroxy group, an amine group, a nitro group, an ether group, or a carbonyl group.

5. The electrode of claim 1, wherein a thickness of the conductive coating layer is in a range of 10 nm to 5 *µ*m.

6. The electrode of claim 1, wherein a pencil hardness of the conductive coating layer is in a range of 8B to 2H.

7. The electrode of claim 1, wherein the electrode mixture layer is formed on a region including the main body.

8. An electrode assembly having a structure where at least one positive electrode and at least one negative electrode are laminated in a state that a separator is interposed therebetween,
wherein a positive electrode tab formed on the positive electrode and a negative electrode tab formed on the negative electrode are joined by welding, and
wherein at least one of the positive electrode and the negative electrode is the electrode according to claim 1.

9. A secondary battery comprising the electrode assembly according to claim 8.

10. A method of manufacturing an electrode, the method comprising:
preparing a current collector including a main body and an electrode tab formed at one side of the main body;
coating a coating liquid, which is obtained by dissolving a conducting polymer of which resistance increases when a temperature rises, in an organic solvent, on the current collector;
forming a conductive coating layer by drying the current collector having the coating liquid coated thereon; and
forming an electrode mixture layer by coating an electrode mixture including an electrode active material, on the conductive coating layer,
wherein the coating liquid is coated on a region including both the main body and the electrode tab.

11. The method of claim 10, wherein the conducting polymer includes at least one selected from the group consisting of a polymerized unit represented by a following chemical formula 1 and a polymerized unit represented by a following chemical formula 2: 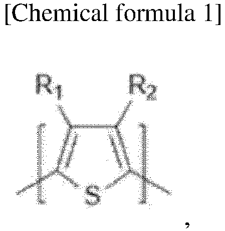 wherein each of R₁ and R₂ is independently a hydrogen, a substituted or unsubstituted alkyl group having 1 to 20 carbon atoms, a carboxyl group, a hydroxy group, a amine group, a nitro group, an ether group or a carbonyl group; and 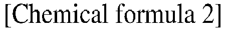 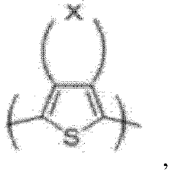 wherein X is a functional group represented by a following chemical formula 3: 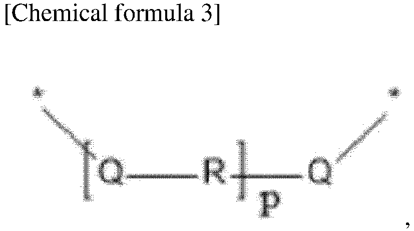 wherein Q is an oxygen or sulfur atom, R is a substituted or unsubstituted alkylene group having 1 to 5 carbon atoms, and p is a natural number equal to or greater than 1.

12. The method of claim 11, wherein the polymerized unit represented by the chemical formula 2 is represented by a following chemical formula 4: 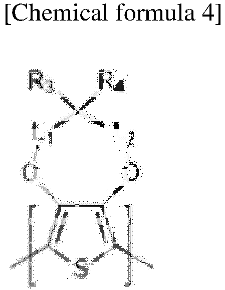 wherein each of L₁ and L₂ is independently a substituted or unsubstituted alkylene group having 1 to 20 carbon atoms, and each of R₃ and R₄ is independently a hydrogen, an alkyl group having 1 to 20 carbon atoms, a carboxyl group, a hydroxy group, an amine group, a nitro group, an ether group, or a carbonyl group.

13. The method of claim 10, wherein a pencil hardness of the conductive coating layer is in a range of 8B to 2H.
